Europäisches Patentamt

European Patent Office

Office européen des brevets

(11) Publication number: **0 042 680**
**B1**

## (12) EUROPEAN PATENT SPECIFICATION

(45) Date of publication of patent specification: **19.09.84**

(51) Int. Cl.³: **H 04 N 5/26**

(21) Application number: **81302464.3**

(22) Date of filing: **03.06.81**

(54) **A viewfinder for a television camera.**

(30) Priority: **24.06.80 GB 8020589**

(43) Date of publication of application:
**30.12.81 Bulletin 81/52**

(45) Publication of the grant of the patent:
**19.09.84 Bulletin 84/38**

(84) Designated Contracting States:
**BE DE FR GB NL**

(56) References cited:
**DE-B-1 076 263**
**US-A-2 384 232**
**US-A-2 784 247**
**US-A-2 952 738**

(73) Proprietor: **LINK ELECTRONICS LIMITED**
**North Way Walworth Industrial Estate**
**Andover Hampshire (GB)**

(72) Inventor: **Kinch, John Peter**
**10, Milton Avenue**
**Andover, Hampshire (GB)**

(74) Representative: **Freed, Arthur Woolf et al**
**MARKS & CLERK 57-60 Lincoln's Inn Fields**
**London WC2A 3LS (GB)**

Courier Press, Leamington Spa, England.

## Description

This invention relates to a viewfinder for a television camera.

Television cameras are conventionally provided with a viewfinder which enables the camera operator to see the picture being generated by the television camera. The viewfinder itself consists of a TV monitor which receives the output signals of the television camera and displays them.

Several systems are known for displaying lines or other indicators on the screen of a television camera viewfinder. U.S. Patent 2,384,232 discloses a system providing a mechanical arrangement of two vertical and two horizontal lines which are displaced so as to mask the field of view so that the camera operator is aware of which part of the viewfinder field is being transmitted. In contrast U.S. Patent 2,784,247 discloses a system providing indicators, such as arrows, which are manipulated by the camera operator and included in the camera output so as to draw attention to features in the television image.

It is commonly necessary, when producing television programmes, to direct the camera towards a caption consisting of wording and it is necessary to ensure that the caption is at the correct orientation on the screen, normally horizontal. Neither of the above described systems address this problem.

It is an object of this invention to provide a viewfinder for a television camera in which the problem of aligning a caption is alleviated.

According to this invention there is provided a viewfinder for a television camera comprising generating means for electronically generating a horizontal line movable to any position on the screen of the viewfinder, which horizontal line is not included in the television camera output.

Preferably, there are provided second generating means for electronically generating a vertical line movable to any position on the screen of the viewfinder, which vertical line is not included in the television camera output.

The vertical line may, for example, be used to align an edge of a building with the vertical.

Preferably the first-mentioned generating means comprises a field rate saw tooth generator arranged to receive the field drive signal, horizontal line voltage generating means for generating a voltage signal representative of the height on the screen at which it is desired that the horizontal line should be produced, a comparator arranged to receive the outputs of the field rate saw tooth generator and the horizontal line voltage generating means and to produce an output when they are identical and signal generating means responsive to the output of the comparator to provide the horizontal line.

Preferably, the second generating means comprises a line rate saw tooth generator arranged to receive the line drive signal, vertical line voltage generating means arranged to produce a voltage corresponding to the desired distance between the vertical line and one side of the screen, a comparator arranged to compare the output of the line rate saw tooth generator and the vertical line voltage generating means and to produce an output when their potentials are equal.

The output of the comparator occurs once per line and may be used to produce a point on the screen, the points joining together to form a vertical line.

Preferably, a zoom angle indicator is provided and comprises means for generating a mark occurring along the upper horizontal line, its distance from one end of the upper horizontal line being indicative of the zoom angle.

Preferably, the zoom angle indicator comprises zoom angle voltage generating means for generating a voltage representative of the zoom angle and a comparator which compares the output of the line rate saw tooth generator with the output of the zoom angle voltage generating means and produces an output signal when the voltage of its inputs are similar.

A viewfinder in accordance with this invention will now be described, by way of example only, with reference to the accompanying drawings, of which:—

Figure 1 is a view of the screen of the viewfinder; and

Figure 2 is a circuit diagram of an embodiment of the invention.

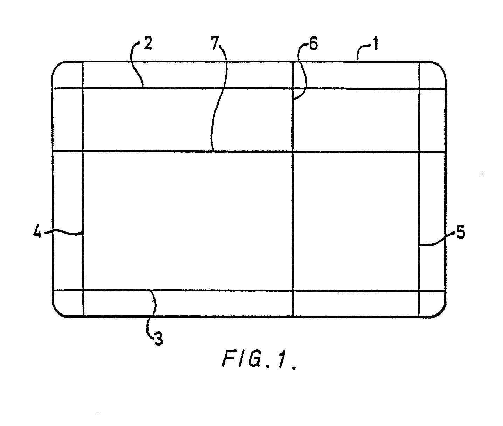

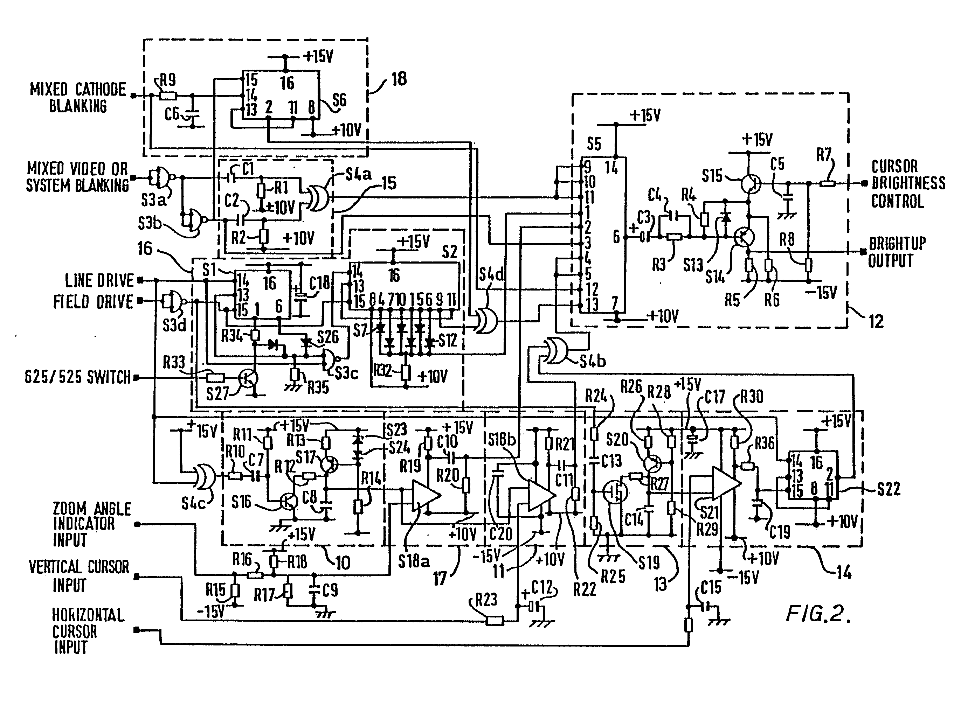

Referring to Figure 1, the screen 1 of a viewfinder of a television camera has a number of lines provided on it by a cursor generator which is shown in detail in Figure 2. The lines consist of fixed upper and lower horizontal lines 2 and 3 respectively situated adjacent to the top and bottom of the screen. Also provided are fixed vertical lines 4 and 5 situated adjacent to the left-hand and right-hand sides of the screen respectively. There is provided a movable vertical line (the "vertical cursor") 6 and a movable horizontal line (the "horizontal cursor") 7, knobs being provided for manipulation by the television camera operator to move the lines 6 and 7 horizontally and vertically respectively.

Referring now to Figure 2, the viewfinder utilizes various pulses from a synchronizing pulse generator IC located upon a video processing card within the camera.

The viewfinder uses decade counters S1, S2, S6, and S22 which are all similar and are CD 4017B decade counters sold by RCA. In these decade counters pins 13, 14 and 15 are the clock inhibit, clock and reset terminals respectively. Pins 3, 2, 4, 7, 10, 1, 5, 6, 9 and 11 are respectively the "0", "1", "2", "3", "4", "5", "6", "7", "8" and "9" outputs whereas the pin 12 output is the carry out.

A line rate saw tooth generator 10 includes transistors S16 and S17 and a capacitor C8 and produces an output in the form of a line rate saw tooth signal. In detail, capacitor C8 is

2

charged up through transistor S17 which acts as a current generator and is discharged by transistor S16 once per line; for this purpose the base of the transistor S16 receives the line drive pulses through a gate S4c. The line rate saw tooth signal is applied to a comparator S18b of a vertical cursor comparator 11 where it is compared with a vertical cursor input being the signal from a manually operable potentiometer. The output of the comparator S18b is differentiated by a differentiating circuit consisting of capacitor C11 and a resistor R22 and consists of a pulse produced once per line. This pulse is applied through an adding gate S4b to a combining gate S5 of a combining gate and output amplifier 12 which will be discussed later. The pulses together produce the vertical cursor 6.

A field rate saw tooth generator 13 has a current generator transistor S20 arranged to charge up a capacitor C14; the capacitor C14 is discharged once per field by FET transistor S19 connected to receive field drive pulses.

The output of the generator 13 in the form of a field rate saw tooth signal is applied to a comparator S21 of a horizontal cursor comparator and one line counter 14; comparator S21 also receives a horizontal cursor input in the form of a signal from a manually operable potentiometer and produces an output once per field in dependence on the magnitude of the horizontal cursor input; the output of the comparator S21 is applied to the decade counter S22 which produces ten successive output pulses which correspond to ten horizontal lines. Only one of these is, of course, required and the first is not used as it might be a partial line so that the second output pulse (output "1") appearing at pin 2, which will produce an entire horizontal line or cursor, is utilised and is applied through the gate S4b to the gate 5 previously referred to. Obviously any output other than the first could be used but the second is chosen so as to avoid any unnecessary delay. The width of the pulse appearing at terminal 2 of decade counter S22 is sufficient to provide the horizontal cursor 7.

A left-hand side and right-hand side vertical line generator 15 generates vertical lines 4 and 5 shown in Figure 1. The generator 14 has a first differentiator consisting of a capacitor C1 and a resistor R1 which receives the mixed video or system blanking after inversion by a gate S3a and a second differentiator consisting of capacitor C2 and resistor R2 which receives the mixed video blanking after a double inversion by the gate S3a and a second gate S3b. The output of the differentiators are pulses at the beginning and end of each picture period of each line and these are added by a gate S4a and applied to the gate S5 of the combining gate and output amplifier 12 previously referred to. The output of gate S4a will be a pulse at the beginning and end of each line and these add together to form the vertical lines 4 and 5 shown in Figure 1.

A circuit 16 constitutes an upper horizontal line generator and zoom angle indicator gating pulse generator and includes the decade counter S1 which receives line drive and field drive pulses; decade counter S1 is arranged to count the line drive pulses occurring after the end of each field drive pulse, each field drive pulse being used as a reset. Pin 1 of decade counter S1 is connected to earth through a transistor S27 connected to a 625/525 switch on the viewfinder. When the switch is set to the 625 position transistor S27 is arranged to be cut off so that an output will occur at pin 1 of the decade counter S1. However, when 525 lines is selected transistor S27 does conduct so that effectively pin 1 is disabled. The only output pins of decade counter S1 which are utilized are numbers 1 and 6 which are respectively the "5" and "7" outputs. Thus, when 625 is selected, the "5" output is utilized as this occurs first whereas when 525 is selected the "7" output is employed. The outputs of pins 1 and 6 are added together and are applied to one input of a gate S3c which also receives the line drive pulses. Gate S3c passes its input, that is to say the "5" output when 625 is chosen and the "7" output when the 525 is chosen, to the pin 14 (the clock input) of the decade counter S2 which counts up the clock pulses applied to its input pin 14. The field drive pulses are applied to reset pin 15 of both decade counters S1 and S2. The "8" output appearing at pin 9 of decade counter S2 is applied through gate S4d to the gate S5 of the combining gate and output amplifier 12. The "9" output occurring at pin 11 of decade counter S2 is fed to its clock inhibit pin 13 preventing further counting once the "9" output is generated. It will be seen from the part of the description of circuit 16, which has so far been given that a pulse appears at the output pin 9 of decade counter S2 once for each field drive pulse and this generates the upper horizontal line 2 shown in Figure 1. The zoom angle indicator gating pulse generator utilizes pins 4, 7, 10, 1, 5 and 6 of decade counter S2 and these correspond to outputs "2" to "7" of counter S2. These outputs are added and applied to the gate S5 of the combining gate and output amplifier 12. It will be appreciated that each of the outputs 2 to 7 is sufficient to produce a horizontal line and added together they will produce a thick band across the top of the monitor screen were there to be no further gating.

A zoom angle indicator 17 has a comparator S18a which receives the line rate saw tooth signal from the generator 10 and also a zoom angle indicator input taken from the zoom angle control. At coincidence the comparator S18a produces an output pulses which is differentiated by the circuit consisting of the capacitor C10 and the resistor R20. The differentiated pulse is applied to another input of the gate S5 and it is used to gate the zoom angle indicator gating pulse signal received from the six output pins of the decade counter S2. Thus what would have been a thick wide band across the top of the monitor is reduced to a narrow line, the height of which corresponds to six horizontal lines on the monitor and the horizontal position of which across the top of the monitor is indicative of the zoom angle.

A lower horizontal line generator 18 generates the lower horizontal line 3 shown in Figure 1. Lower horizontal line generator 18 includes the decade counter S6 which receives at its clock pin 14 mixed cathode blanking after delay by a differentiating circuit consisting of a resistor R9 and a capacitor C6. The decade counter S6 also receives at its reset pin 15 mixed video blanking after inversion by inverter S3b so that decade counter S6 is inhibited apart from during the field and line video blanking pulses occurring in mixed video blanking. The decade counter S6 counts the positive transitions of mixed cathode blanking. During the beginning of each field blanking pulse of mixed video blanking, that is to say before the field blanking pulse of mixed cathode blanking, the line blanking pulses of mixed cathode blanking are passed to the clock input terminal 14 after being delayed by the differentiating circuit consisting of resistor R9 and capacitor C6. The output pulse appearing on output 2 which is the "1" output is used to provide the lower horizontal line and is supplied through the adding gate S4d to the gate S5 of combining gate and output amplifier 12.

The purpose of the delay provided by resistor R9 and capacitor C6 is to ensure that the positive transistions of each line pulse of mixed cathode blanking occur after the corresponding positive transitions of each line pulse of mixed video blanking.

Mixed cathode blanking is itself fed directly to the gate S5 as is mixed video blanking after inversion by the inverter S3b. The mixed video blanking applied to the gate S5 is utilized by the gate S5 to limit the length of the vertical lines 4, 6 and 5. The line blanking pulses within mixed cathode blanking are utilized within gate S5 to limit the length of the horizontal lines 2 and 3. Gate S5 is an AND-OR-INVERT gate.

The combining gate and output amplifier 12 has an amplifier including a transistor S14 to amplify the output of the gate S5 which produces a bright-up output which produces the various lines shown in Figure 1. A transistor S15 is utilized to control the current through the transistor S14 of the amplifier being controlled by a cursor brightness control so that all the lines shown in Figure 1 have their brightness controllable.

It should be appreciated that since the lower horizontal line is produced utilising mixed cathode blanking and mixed video blanking, it will appear outside the picture visible on an ordinary television set and this equally applies to the upper horizontal line, the zoom angle indicator and the lower and upper horizontal lines 2 and 3.

## Claims

1. A viewfinder for a television camera characterised by generating means for electronically generating a horizontal line (7) movable to any position on the screen (1) of the viewfinder, which horizontal line (7) is not included in the television camera output.

2. A viewfinder according to claim 1 characterised by second generating means for electronically generating a vertical line (6) movable to any position on the screen (1) of the viewfinder, which vertical line (6) is not included in the television camera output.

3. A viewfinder according to claim 1 or 2, characterised in that the generating means for generating a movable horizontal line comprises a field rate saw tooth generator (13) which receives the field drive signal, horizontal line voltage generating means which generates a voltage signal representative of the height on the screen (1) at which it is desired that the horizontal line should be produced, a comparator (S21) which receives the outputs of the field rate saw tooth generator (13) and the horizontal line voltage generating means and produces an output when they are identical and signal generating means responsive to the output of the comparator (S21) to provide the horizontal line.

4. A viewfinder according to claim 2, characterised in that the second generating means comprises a line rate saw tooth generator (10) which receives the line drive signal, vertical line voltage generating means arranged to generate a voltage corresponding to the desired distance between the vertical line and one side of the screen (1), a comparator (S18b) which compares the outputs of the line rate saw tooth generator (10) and the vertical line voltage generating means and produces an output when their potentials are equal.

5. A viewfinder according to any preceding claim, characterised by a zoom angle indicator which generates a mark occurring along an upper horizontal line (2), its distance from one end of the upper horizontal line (2), being indicator comprises zoom angle voltage generating means which generates a voltage generating means which generates a voltage representative of the zoom angle and a comparator (S18a) which compares the output of a line rate saw tooth generator (10) with the output of the zoom angle voltage generating means and produces an output signal when the voltages of its inputs are similar.

## Revendications

1. Viseur pour une caméra de télévision, caractérisé par des moyens générateurs pour créer électroniquement une ligne horizontale (7) pouvant être déplacée à toute position sur l'écran (1) du viseur, laquelle ligne horizontale (7) n'est pas incluse dans la sortie de la caméra de télévision.

2. Viseur selon la revendication 1, caractérisé par des seconds moyens générateurs pour créer électroniquement une ligne verticale (6) pouvant être déplacée à toute position sur l'écran (1) du viseur, laquelle ligne verticale (6) n'est pas incluse dans la sortie de la caméra de télévision.

3. Viseur selon la revendication 1 ou la revendication 2, caractérisé en ce que les moyens générateurs pour créer une lignes horizontales mobile comportent un générateur de dents de scie de cadence de trame (13) qui reçoit le signal de pilotage de trame, des moyens générateurs de tension de lignes horizontales qui créent un signal de tension représentatif de la hauteur sur l'écran (1) à laquelle il est souhaité que la lignes horizontales puisse être produite, un comparateur (S21) qui reçoit les sorties du générateur de dents de scie de cadence de trame (13) et des moyens générateurs de tension de lignes horizontaleset produisent une sortie lorsque celles-ci sont identiques, et des moyens générateurs de signaux sensibles à la sortie du comparateur (S21) pour produire la ligne horizontale.

4. Viseur selon la revendication 2, caractérisé en ce que les seconds moyens générateurs comportent un générateur de dents de scie de cadence de lignes (10) qui reçoit le signal de pilotage de lignes, des moyens générateurs de tension de lignes verticales agencés pour créer une tension correspondant à la distance désirée entre la ligne verticale et un côlé de l'écran (1), un comparateur (S18b) qui compare les sorties du générateur de dents de scie de cadence de lignes (10) et des moyens générateurs de tension de lignes verticales, et produit une sortie lorsque leurs potentials sont égaux.

5. Viseur selon l'une quelconque des revendications précédentes, caractérisé par un indicateur d'angle de zoom qui crée une marque apparaissant le long d'une ligne horizontale supérieure (2), sa distance à une extrémité de la ligne horizontale supérieure (2) étant indicative de l'angle de zoom, l'indicateur d'angle de zoom comprenant des moyens générateurs de tension d'angle de zoom qui créent une tension représentative de l'angle de zoom et un comparateur (S18a) qui compare la sortie d'un générateur de dents de scie de cadence de lignes (10) avec la sortie des moyens générateurs de tension d'angle de zoom et produit un signal de sortie lorsque les tensions de ces entrées sont similaires.

**Patentansprüche**

1. Sucher für eine Fernsehkamera, gekennzeichnnet durch eine Erzeugungseinrichtung zum elektronischen Erzeugen einer Horizontallinie (7), die in eine beliebige Stellung auf dem Bildfeld (1) des Suchers bewegbar ist und nicht im Ausgang der Fernsehkamera enthalten ist.

2. Sucher nach Anspruch 1, gekennzeichnet durch eine zweite Erzeugungseinrichtung zum elektronischen Erzeugen einer Vertikallinie (6), die in eine beliebige Stellung auf dem Bildfeld (1) des Suchers bewegbar und nicht im Ausgang der Fernsehkamera enthalten ist.

3. Sucher nach Anspruch 1 oder 2, dadurch gekennzeichnet, daß die Erzeugungseinrichtung zum Erzeugen einer bewegbaren Horizontallinie einen Vertikalsägezahngenerator (13), der das Bildsteuersignal aufnimmt, einen Horizontallinienspannungsgenerator, der ein für die Höhe des Bildfelds (1), auf der die Horizontallinie erzeugt werden soll, typisches Spannungssignal erzeugt, einen Komparator (S21), der die Ausgangssignale des Vertikalsägezahngenerators (13) und des Horizontallinienspannungsgenerators erhält und bei Identität der Signale ein Ausgangssignal erzeugt, und einen auf das Ausgangssignal des Komparators (S21) ansprechenden Signalerzeuger zur Leiferung der Horizontallinie aufweist.

4. Sucher nach Anspruch 2, dadurch gekennzeichnet, daß die zweite Erzeugungseinrichtung einen Bildzeilensägezahngenerator (10), der das Zeilensteuersignal aufnimmt, einen Vertikallinienspannungsgenerator zur Erzeugung einer den gewünschten Abstand zwischen der Vertikallinie und einer Seite des Bildfelds (1) entsprechenden Spannung und einen Komparator (S18b) aufweist, der die Ausgangssignale des Bildzeilensägezahngenerators (10) und des Vertikallinienspannungsgenerators vergleicht und bei Gleichheit derer Potentiale ein Ausgangssignal erzeugt.

5. Sucher nach einem der vorangehenden Ansprüche, gekennzeichnet durch eienen Anzeiger für den Brennweiten- und Bildgrößenwinkel, der entlang der oberen Horizontallinie (2) eine Markierung erzeugt, deren Abstand vom einen Ende der oberen Horizontallinie (2) den Brennweiten- und Bildgrößenwinkel zum Ausdruck bringt, wobei der Anzeiger einen Brennweiten- und Bildgrößenwinkel-Spannungserzeuger, der eine für den Brennweiten- und Bildgrößenwinkel typische Spannung erzeugt, und einen Komparator (S18a) aufweist, der das Ausgangssignal eines Zeilensägezahngenerators (10) mit dem Ausgangssignal des Brennweiten- und Bildwinkel- Spannungsgenerators vergleicht und bei deren Ähnlichkeit ein Ausgangssignal erzeugt.

FIG.1.

FIG.2.